# EUROPÄISCHE PATENTSCHRIFT

(11) **EP 2 234 746 B1**
(45) Veröffentlichungstag und Bekanntmachung des Hinweises auf die Patenterteilung: **30.11.2011**
(21) Anmeldenummer: 08871652.7
(22) Anmeldetag: 12.12.2008
(51) Int. Cl.: B23B 51/00

(54) **BOHRWERKZEUG**
DRILLING TOOL
OUTIL DE PERÇAGE

(30) Priorität: 31.01.2008 DE 202008001348 U
(43) Veröffentlichungstag der Anmeldung: 06.10.2010
(73) Patentinhaber: Kennametal Inc., Latrobe, PA 15650-0231 (US)
(72) Erfinder: MERGENTHALER, Peter, Karl, 91477 Markt Bibart (DE); ZEUG, Berthold, Heinrich, 90762 Fürth (DE)
(74) Vertreter: FDST Patentanwälte
(86) Internationale Anmeldenummer: PCT/EP2008/010602
(87) Internationale Veröffentlichungsnummer: WO 2009/095060

(56) Entgegenhaltungen:
- EP-A- 0 796 161
- DE-U1- 20 118 111
- US-A- 4 074 949
- US-A- 4 648 760

## Beschreibung

### Hintergrund der Erfindung

Die Erfindung betrifft ein Bohrwerkzeug gemäß dem Oberbegriff des Anspruchs 1. Ein solches Bohrwerkzeug ist prinzipiell bekannt aus der EP-B-0 796 161. Das Bohrwerkzeug besteht aus einem Grundkörper und in den Grundkörper einsetzbare Schneidplatten. Der Grundkörper ist mit Spannuten zur Späneabfuhr versehen. Diese Spannuten können entweder gerade oder gedrillt sein. Zur Anbringung der Schneidplatten ist am Ende einer oder mehrerer Spannuten ein Plattensitz vorgesehen. Dieser Plattensitz dient als Aufnahme für die Schneidplatte.

Bei dem vorerwähnten bekannten Bohrwerkzeug ist die Schneidplatte als Umsetzplatte ausgeführt. Die bekannte Umsetzplatte weist eine Grundfläche und eine der Grundfläche abgewandte Spanfläche auf. Mit der Grundfläche liegt die Umsetzplatte auf einer entsprechenden Haltefläche im Plattensitz auf. Die Umsetzplatte weist eine im Wesentlichen rechteckförmige Grundform auf mit der Folge, dass auch die Spanfläche im Wesentlichen rechteckförmig ist. Die langen Seitenkanten der Spanfläche bilden auf diese Weise jeweils eine Nebenschneide und die kurzen Seitenkanten jeweils eine Hauptschneide. Liegt die Umsetzplatte im Plattensitz ein, sind eine Hauptschneide und eine Nebenschneide inaktiviert, weil sie an den Seitenwänden des Plattensitzes anliegen, während die verbleibende aktive Nebenschneide und die ebenfalls verbleibende aktive Hauptschneide aus dem Plattensitz und damit aus dem Werkzeug hervorstehen, um das Bohrloch bei rotierendem Bohrwerkzeug spanend bearbeiten zu können. Die aktive Hauptschneide und die aktive Nebenschneide einerseits sowie die inaktive Hauptschneide und die inaktive Nebenschneide andererseits bilden jeweils ein zueinander gehörendes Schneidenpaar. Sind die aktive Hauptschneide und die aktive Nebenschneide abgenutzt, wird die Umsetzplatte im Plattensitz einfach um 180° in der Ebene des Plattensitzes verdreht mit der Folge, dass die vorher aktive Hauptschneide und die vorher aktive Nebenschneide in ihre jeweilige Inaktivstellung verdreht werden, während die vorher inaktiven Schneiden nunmehr als aktive Schneiden aus dem Plattensitz in der beschriebenen Weise hervorstehen. Die bei dem bekannten Bohrwerkzeug vorgesehenen Umsetzplatten weisen also stets zwei nutzbare von jeweils einer Nebenschneide und einer Hauptschneide gebildete Schneidenpaare auf.

### Zusammenfassung der Erfindung

Ausgehend von dem vorstehend beschriebenen Stand der Technik liegt der Erfindung die Aufgabe zugrunde, ein Bohrwerkzeug zur Verfügung zu stellen, welches mehr als zwei aus einer Hauptschneide und einer Nebenschneide gebildete, nutzbare Schneidenpaare aufweist. Die Lösung der Aufgabe besteht in der Merkmalskombination des Anspruchs 1. Die auf den Anspruch 1 zurückbezogenen Ansprüche beinhalten teilweise vorteilhafte und teilweise für sich selbst erfinderische Weiterbildungen der Erfindung.

Ein wesentlicher Bestandteil der Erfindung ist die Verwendung von Wendeschneidplatten. Diese Wendeschneidplatten unterscheiden sich von den vorerwähnten Umsetzschneidplatten dadurch, dass nicht nur eine Hauptfläche als Spanfläche ausgestaltet ist, sondern beide einander abgewandten Hauptflächen zugleich Spanflächen sind. Im Vergleich zum Stand der Technik entfällt also die bezogen auf den Schneidvorgang funktionslose Grundfläche. Da die Gestaltung der Spanfläche der erfindungsmäßigen Wendeschneidplatte sich im Wesentlichen an der Gestaltung der Spanfläche der aus der EP-B-0 796 161 bekannten Spanflächengestaltung orientiert, ist bei im Plattensitz einliegender Wendeschneidplatte zwischen zumindest einem Teilbereich der inaktiven Nebenschneide der aktiven Spanfläche und der benachbarten Seitenwand des Plattensitzes ein Schlitz freigelassen. Um zu verhindern, dass sich in diesem Schlitz Späne oder Spanreste einklemmen, die bei rotierendem Bohrwerkzeug die Bohrungswände zerstören können oder ein Verklemmen des Bohrwerkzeugs nach sich ziehen können, steht aus der Oberseite der Seitenwand des Plattensitzes in Richtung auf die inaktive Nebenschneide eine den Spalt abdeckende Führungslippe hervor. Die Führungslippe dient somit als Spanführungselement und führt auf diese Weise das abgespante Material in die Spannut, die wiederum gewendelt oder gerade ausgeführt sein kann, hinein, über welche das abgespante Spanmaterial abtransportiert wird.

Mit der Erfindung ist es deshalb möglich, eine Wendeschneidplatte mit zwei einander abgewandten Spanflächenseiten zu verwenden, bei welcher die so entstehenden beiden Spanflächen analog einer Spanfläche der eingangs geschilderten Umsetzplatte ausgestaltet sind. Mit der Erfindung stehen bei der Bearbeitung somit nicht nur zwei Schneidenpaare mit jeweils einer Haupt- und einer Nebenschneide zur Verfügung, sondern vier Schneidenpaare. Mit der Verdoppelung der Anzahl der Spanflächen geht also eine Verdoppelung der wirksamen Schneidenpaare einher. Durch diese Verdoppelung der Schneidenpaare wird der Materialverbrauch für die Fertigung der Schneidplatten halbiert. Dies zieht größere Kostenvorteile nach sich. Die Material- und Fertigungskosten pro Schneidenpaar werden signifikant gesenkt. Darüber hinaus muss für dieselbe Anzahl von Schneidenpaaren wie beim Stand der Technik nur noch die Hälfte der Schneidplatten vorgehalten werden. Schließlich ist die Verwendung einer Wendeschneidplatte mit doppelt verwendbaren Spanflächenseiten auch umweltfreundlicher, weil bei der Fertigung pro Schneidenpaar weniger Energie verbraucht wird und der Materialverbrauch je Schneidplatte signifikant sinkt.

In vorteilhafter Ausgestaltung überdeckt die an der Seitenwand des Plattensitzes angeformte Führungslippe die inaktive Nebenschneide der aktiven Spanfläche und schützt diese somit vor einer Beschädigung durch abgespantes Material. Die Führungslippe ist hierbei als sich an die Spanfläche anschließende Nebenfreifläche wirksam und begünstigt so eine schnelle und zuverlässige Spanabfuhr in Richtung auf die Spannut.

In weiterer Ausgestaltung sind in der Haltefläche, der Seitenwand oder in der Haltefläche und der Seitenwand eine oder mehrere Freimachungen vorgesehen. Diese Freimachungen dienen zur Aufnahme von Vorsprüngen, welche aus der inaktiven Spanflächenseite der Wendeschneidplatte abstehen. Solche Vorsprünge können als Spanformer oder Spanbrecher dienen. Auf diese Weise wird eine besonders flächige Auflage der Wendeschneidplatte und ihrer inaktiven Spanfläche auf der Haltefläche des Plattensitzes bzw. besonders dichte Anlage an der Seitenwand begünstigt. Bezogen auf die Lage an der Seitenwand besteht der zusätzliche Vorteil der Minimierung des Schlitzes zwischen der inaktiven Nebenschneide und der Seitenwand. Die Freimachungen in der Seitenwand begünstigen somit ein besonders nahes Anliegen der Wendeschneidplatte an der Seitenwand.

In einer bevorzugten Ausführung der Erfindung entspricht die Anzahl und die Lage der Freimachungen exakt der Lage und der Anzahl der entsprechenden Vorsprünge auf der Wendeschneidplatte. In einer weiterhin bevorzugten Ausführungsform ist es möglich, das Bohrwerkzeug mit den vorstehend erläuterten Freimachungen um die die inaktive Nebenschneide der aktiven Spanfläche überdeckende Führungslippe zu ergänzen.

In weiterer Ausgestaltung sind die von den Nebenschneiden randseitig begrenzten Seitenwände des die Wendeschneidplatte bildenden Schneidplatten-Körpers so ausgestaltet, das ein Teilbereich der Seitenwand sich in Richtung auf die jeweilige Nebenschneide hin verjüngt. Diese Verjüngung bewirkt bei rotierendem Werkzeug einen Freigang des Werkzeugs. Auf diese Weise ist es möglich, dass die Wendeschneidplatten ihren Mittelstand im Werkzeug beibehalten können. Dies bedeutet, dass die Hauptschneiden des Werkzeugs mit der Mittellinie des Bohrungskreises fluchten. In weiterer Fortbildung dieser Gestaltung der Schneidplatte spannt der verjüngte Bereich eine im Wesentlichen dreieckförmige Fläche auf der Seitenwand des Körpers der Wendeschneidplatte auf.

### Kurzbeschreibung der Zeichnungen

- Fig. 1: zeigt das Ende der Spannut des Bohrwerkzeugs mit im Plattensitz einliegender Wendeschneidplatte;
- Fig. 2: zeigt eine Seitenansicht in den Plattensitz hinein gemäß Pfeil II in Fig. 1;
- Fig. 3: zeigt eine erste Ausführungsform einer Wendeschneidplatte;
- Fig. 4: zeigt eine weitere Ausführungsform der Wendeschneidplatte mit einer er höhten Randkante im Bereich einer Hauptschneide;
- Fig. 5: zeigt eine Ausführungsform der Wendeschneidplatte mit zweigeteilter Hauptschneide mit einer reduzierten Länge des äußeren Bereichs der Hauptschneide und einer vergrößerten Länge des inneren Bereichs der Hauptschneide;
- Fig. 6: zeigt eine letzte Ausführungsform der Wendeschneidplatte.

### Beschreibung der bevorzugten Ausführungsbeispiele

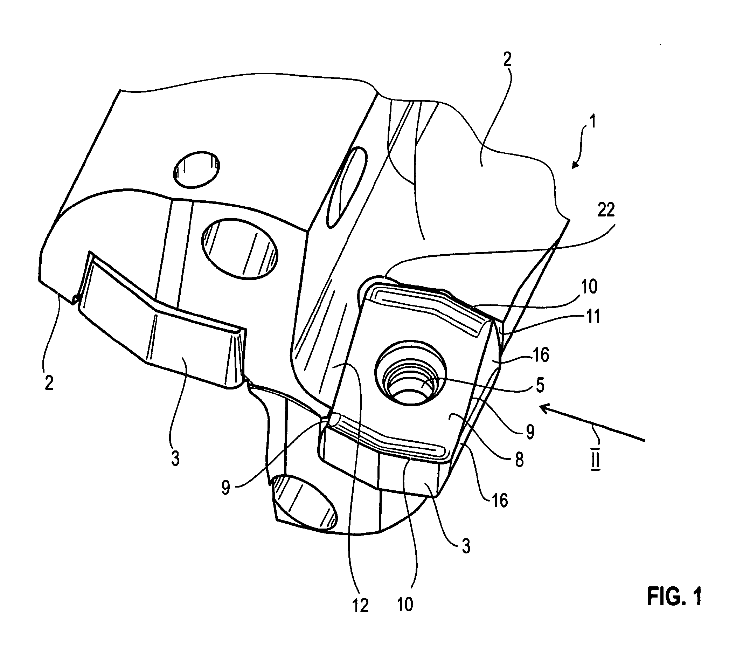

Das Bohrwerkzeug 1 weist im Ausführungsbeispiel zwei Spannuten 2 auf. An dem in Fig. 1 dargestellten Ende der beiden Spannuten 2 ist jeweils eine Wendeschneidplatte 3 in einem Plattensitz 4 gehalten.

Die Wendeschneidplatte 3 ist mittig von einer Fixierbohrung 5 durchbrochen. Im Montageendzustand ist die Fixierbohrung 5 von einer Schraube oder Ähnlichem durchsetzt, um die Wendeschneidplatte 3 am Bohrwerkzeug 1 wirksam zu fixieren.

Der Körper der Wendeschneidplatte 3 weist zwei einander gegenüberliegende lange Seitenwände 6 und zwei ebenfalls gegenüberliegende kurze Seitenwände 7 auf. Die Seitenwände 6,7 werden jeweils von den beiden als Spanflächen 8 ausgestalteten Planebenen begrenzt. Im Bereich zwischen den Seitenwänden 6,7 und den Spanflächen 8 entstehen jeweils Schneidkanten der Nebenschneiden 9 und der Hauptschneiden 10. In dem in Fig. 1 dargestellten Ausführungsbeispiel ist die rechte Nebenschneide 9 die aktive Nebenschneide und die der Spannut 2 abgewandte Hauptschneide 10 die aktive Hauptschneide. Die inaktive Hauptschneide 10 liegt an der Seitenwand 11 des Plattensitzes 4 an. Dasselbe gilt für die in Fig. 1 links angeordnete inaktive Nebenschneide 9. Die Nebenschneide 9 wird dabei von der Führungslippe 12 überdeckt.

Die Führungslippe 12 überdeckt hierbei einen in den Zeichnungen nicht erkennbaren Spalt zwischen der um die Wendeschneidplatte 3 umlaufende Seitenwand 11 des Plattensitzes 4 und der inaktiven Nebenschneide 9. Die Führungslippe 12 bildet eine Führungsfläche bzw. eine Spanfläche für das abgespante Material. Sie leitet das abgespante Material in die Spannut 2 zu dessen Abfuhr hinein.

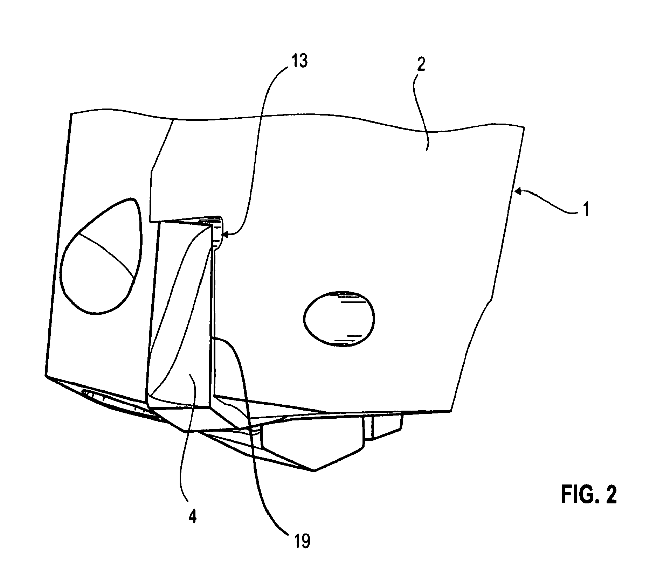

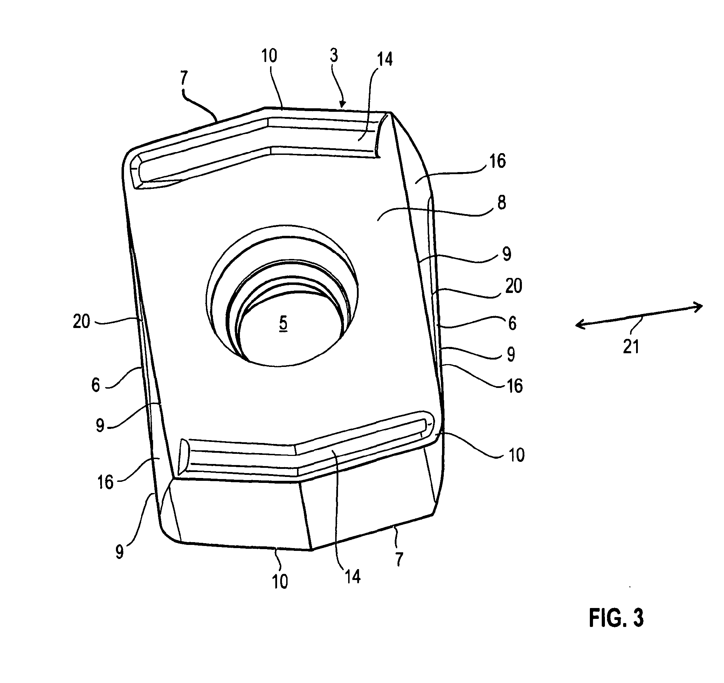

In Fig. 1 weiterhin erkennbar ist eine in die Seitenwand 11 des Plattensitzes4 eingeformte Eckbohrung 22, die in eine in Fig. 2 gezeigte Freimachung 13 zur Aufnahme eines erhöhten Randbereichs der Wendeschneidplatte 3 übergeht. Der von der Freimachung 13 aufgenommene erhöhte Randbereich der Wendeschneidplatte 3 ist auf der in Fig. 1 nicht sichtbaren Spanfläche 8 angeordnet. Die Freimachung 13 ist in Fig. 1 deshalb von der Wendeschneidplatte 3 verdeckt und ist in die Haltefläche 19 des Plattensitzes 4 eingeformt. Die Wendeschneidplatte 3 kann rippenförmige Spanformer 14 wie im Ausführungsbeispiel gemäß Fig. 3 tragen. Ebenso gut ist es möglich, die Spanfläche 8 der Wendeschneidplatte 3 auszumulden zur Bildung ansteigender Randbereiche 15, die ebenfalls eine spanformende Wirkung entfalten.

Auf ihrer langen Seitenwand 6 weist die Wendeschneidplatte 3 einen sich zu jeder Nebenschneide 9 hin verjüngenden Bereich 16 auf. Dieser Bereich 16 spannt auf der langen Seitenwand 6 jeweils eine dreieckförmige Fläche auf. Da jede lange Seitenwand 6 von zwei Nebenschneiden 9 an ihren Oberseiten begrenzt ist, spannen sich auf jeder langen Seitenwand 6 jeweils zwei 180° zueinander verdrehte dreieckförmige Flächen auf. Beide dreieckförmigen Flächen besitzen eine gemeinsame Dreieckslinie, welche die lange Seitenwand 6 nach Art einer Diagonalen 20 achsensymmetrisch zweiteilt. Entlang der Diagonalen 20 weist die Wendeschneidplatte 3 die größte Erstreckung in Querrichtung 21 auf. Die Erstreckung in Querrichtung 21 der Wendeschneidplatte 3 nimmt zu ihren Spanflächen 8 aufgrund der Verjüngung des Bereichs 16 stetig ab. Der verjüngende Bereich 16 bildet so einen Freigang für die Wendeschneidplatte 3 bei rotierendem Bohrwerkzeug 1.

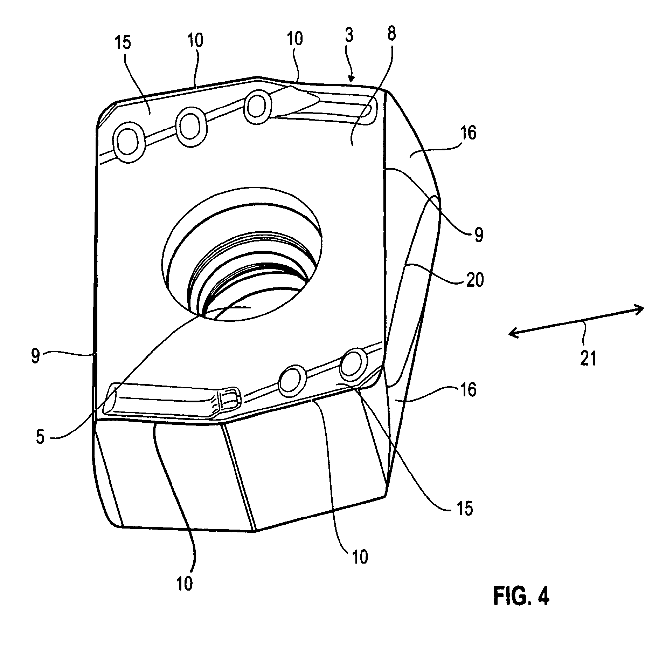

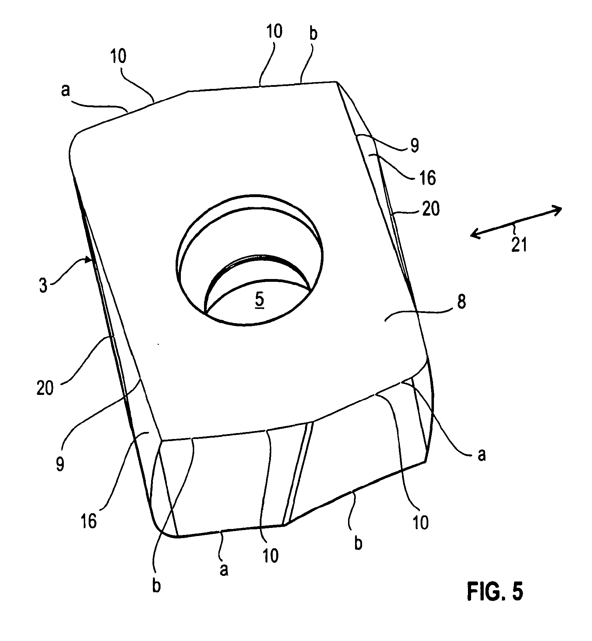

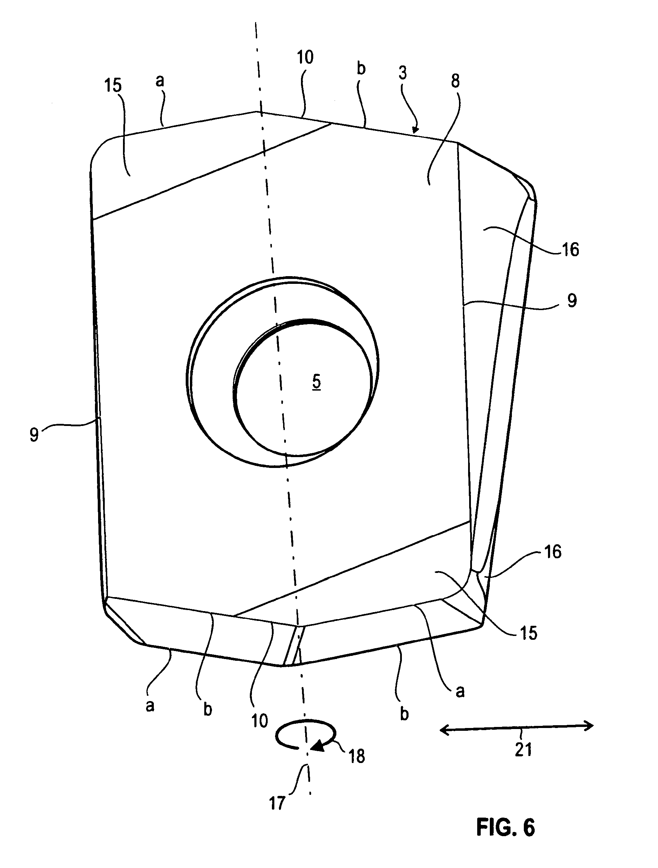

Im Ausführungsbeispiel der Fig. 1, Fig. 3 und Fig. 4 weist die Hauptschneide 10 zwei in einem stumpfen Winkel zueinander stehende Teilbereiche gleicher Länge auf. Im Gegensatz dazu weist das in Fig. 5 und Fig. 6 gezeigte Ausführungsbeispiel eine Hauptschneide mit verschieden langen, stumpfwinklig zueinander stehenden Teilbereichen auf. Die Hauptschneide 10 ist hierbei in einen mit a gekennzeichneten kürzeren äußeren Bereich und in einen mit b bezeichneten längeren inneren Bereich aufgeteilt.

Anhand der Fig. 6 sind die verschiedenen Wendemöglichkeiten der Wendeschneidplatte 3 erläutert. Bei der in den verschiedenen Ausführungsbeispielen dargestellten Wendeschneidplatte 3, also auch bei der in Fig. 6 dargestellten Wendeschneidplatte 3 wird zunächst die dem Betrachter zugewandte, nach oben zeigende Spanfläche 8 zur spanenden Bearbeitung des Werkstücks genutzt. Es wird hierbei mit der aktiven Hauptschneide 10 und der aktiven Nebenschneide 9 so lange gearbeitet, bis diese abgenutzt sind. Anschließend wird die Wendeschneidplatte 3 vom Bohrwerkzeug 1 gelöst und in der Plattenebene, welche der Zeichnungsebene der Zeichnungsfiguren, insbesondere auch der Zeichnungsebene der Fig. 6 entspricht, um 180° gedreht. Auf diese Weise kommt das von der bisherigen inaktiven Nebenschneide 9 und der inaktiven Hauptschneide10 gebildete zweite Schneidenpaar als aktives Schneidenpaar zum Einsatz. Ist auch dieses zweite Schneidenpaar abgenutzt, wird die Wendeschneidplatte 3 um ihre in Fig. 6 gezeigte Mittellängsachse 17 in Drehrichtung 18 wiederum um 180° verschwenkt. Auf diese Weise kommt die zweite, in den Zeichnungen nicht sichtbare, nach unten weisende Spanfläche 8 zum Einsatz. Auch diese zweite, in den Zeichnungen nach unten gerichtete Spanfläche 8 weist wiederum zwei aus jeweils einer Nebenschneide 9 und einer Hauptschneide 10 gebildete Schneidenpaare auf.

Die erhöhten Randbereiche 15 liegen im Montageendzustand in Freimachungen 13 im Plattensitz 4 ein. Auf diese Weise liegt die Wendeschneidplatte 3 besonders gut auf der Haltefläche 19 des Plattensitzes 4 auf. Angestrebt wird eine besonders großflächige Auflage der inaktiven Spanfläche 8 auf der Haltefläche 19.

Die Ausführungsbeispiele sollen nicht begrenzend verstanden werden. Weitere Ausgestaltungen der Erfindung, die den Zeichnungen nicht zu entnehmen sind, sind denkbar.

## Patentansprüche

1. Bohrwerkzeug (1) mit mindestens einer Spannut (2) für die Späneabfuhr mit einem am Ende der Spannut (2) ausgebildeten Plattensitz (4) als Aufnahme für eine Wendeschneidplatte (3) mit mindestens einer Hauptschneide (10) an den beiden Schmalseiten und mit mindestens einer Nebenschneide (9) an den beiden Langseiten einer Spanflächenseite,
**dadurch gekennzeichnet**
**dass** die Wendeschneidplatte (3) zwei einander abgewandte Spanflächenseiten aufweist und mit ihrer inaktiven Spanflächenseite auf einer Haltefläche des Plattensitzes (4) aufliegt und ein Teilbereich der inaktiven Nebenschneide (9) ihrer aktiven Spanflächenseite durch einen Schlitz beabstandet zu der ihr benachbarten Seitenwand (11) des Plattensitzes (4) im Plattensitz (4) einliegt und dass aus der Oberseite der Seitenwand (11) in Richtung auf die inaktive Nebenschneide (9) eine den Schlitz überdeckende Führungslippe (12) vorsteht.

2. Bohrwerkzeug (1) nach Anspruch 1,
**dadurch gekennzeichnet**
**dass** die Führungslippe (12) die inaktive Nebenschneide (9) der aktiven Spanfläche überdeckt.

3. Bohrwerkzeug (1) nach Anspruch 1,
**gekennzeichnet durch**
mindestens eine Freimachung (13) in der Haltefläche (19) und/oder der Seitenwand (11) des Plattensitzes (4) als Aufnahme von aus der inaktiven Spanflächenseite der Wendeschneidplatte (3) herausstehenden Vorsprüngen.

4. Bohrwerkzeug nach Anspruch 1,
**gekennzeichnet durch**
einen sich in Richtung auf die angrenzende Nebenschneide (9) sich verjüngenden Bereich (16) der Seitenwand (6) des Körpers der Wendeschneidplatte (3) zur Bildung eines Freigangs.

5. Bohrwerkzeug nach Anspruch 4,
**dadurch gekennzeichnet**
**dass** der sich verjüngende Bereich (16) eine im Wesentlichen dreieckförmige Fläche auf der Seitenwand (6) des Körpers der Wendeschneidplatte (3) aufspannt.

## Claims

1. Drilling tool (1) comprising at least one flute (2) for the chip removal and comprising an insert seat (4) formed at the end of the flute (2) as a receptacle for an indexable insert (3) having at least one main cutting edge (10) at the two narrow sides and having at least one secondary cutting edge (9) at the two long sides of a rake face side, **characterized in that** the indexable insert (3) has two rake face sides facing away from one another and rests with its inactive rake face side on a holding surface of the insert seat (4), and a section of the inactive secondary cutting edge (9) of its active rake face side rests in the insert seat (4) in such a way as to be at a distance from that side wall (11) of the insert seat (4) which is adjacent to it, said distance being created by a slot, and **in that** a guide lip (12) overlapping the slot projects from the top side of the side wall (11) in the direction of the inactive secondary cutting edge (9).

2. Drilling tool (1) according to Claim 1, **characterized in that** the guide lip (12) covers the inactive secondary cutting edge (9) of the active rake face.

3. Drilling tool (1) according to Claim 1, **characterized by** at least one relieved portion (13) in the holding surface (19) and/or the side wall (11) of the insert seat (4) for accommodating projections of the inactive rake face side of the indexable insert (3).

4. Drilling tool according to Claim 1, **characterized by** a region (16) of the side wall (6) of the body of the indexable insert (3) that tapers in the direction of the adjacent secondary cutting edge (9) in order to form a clearance.

5. Drilling tool according to Claim 4, **characterized in that** the tapering region (16) determines a substantially triangular area on the side wall (6) of the body of the indexable insert (3).

## Revendications

1. Outil de perçage (1) avec au moins une rainure à copeaux (2) pour l'évacuation des copeaux avec un logement de plaque (4) formé à l'extrémité de la rainure à copeaux (2) en vue de recevoir une plaquette amovible (3) présentant au moins un tranchant principal (10) sur les deux côtés étroits et au moins un tranchant secondaire (9) sur les deux côtés longs d'un côté de face de coupe, **caractérisé en ce que** la plaquette amovible (3) présente deux côtés de face de coupe opposés l'un à l'autre et repose par son côté de face de coupe inactif sur une face de maintien du logement de plaque (4) et une zone partielle du tranchant secondaire inactif (9) de son côté de face de coupe actif, espacée par une fente de la paroi latérale (11) du logement de plaque (4) voisine de celui-ci, est située dans le logement de plaque (4) et **en ce qu'**une lèvre de guidage (12) recouvrant la fente est saillante sur le côté supérieur de la paroi latérale (11) en direction du tranchant secondaire inactif (9).

2. Outil de perçage (1) selon la revendication 1, **caractérisé en ce que** la lèvre de guidage (12) recouvre le tranchant secondaire inactif (9) de la face de coupe active.

3. Outil de perçage (1) selon la revendication 1, **caractérisé par** au moins un dégagement (13) dans la face de maintien (19) et/ou de la paroi latérale (11) du logement de plaque (4) comme logement de protubérances saillantes sur le côté de face de coupe inactif de la plaquette amovible (3).

4. Outil de perçage (1) selon la revendication 1, **caractérisé par** une zone (16) de la paroi latérale (6) du corps de la plaquette amovible (3) qui se rétrécit en direction du tranchant secondaire adjacent (9), pour la formation d'un passage libre.

5. Outil de perçage (1) selon la revendication 4, **caractérisé en ce que** la zone qui se rétrécit (16) recouvre une surface essentiellement triangulaire sur la paroi latérale (6) du corps de la plaquette amovible (3).
